(19) Europäisches Patentamt / European Patent Office / Office européen des brevets

(11) **EP 3 876 224 B1**

(12) **EUROPEAN PATENT SPECIFICATION**

(45) Date of publication and mention
of the grant of the patent:
**27.03.2024 Bulletin 2024/13**

(21) Application number: **19878669.1**

(22) Date of filing: **28.10.2019**

(51) International Patent Classification (IPC):
**B60K 35/00** (2024.01)   **G02B 27/00** (2006.01)
**G02B 27/01** (2006.01)   **G02B 30/28** (2020.01)
**H04N 13/305** (2018.01)   **G02B 30/31** (2020.01)
**H04N 13/31** (2018.01)   **H04N 13/346** (2018.01)
**H04N 13/363** (2018.01)   **H04N 13/366** (2018.01)
**G09G 3/00** (2006.01)

(52) Cooperative Patent Classification (CPC):
**H04N 13/305; B60K 35/00; B60K 35/10;
B60K 35/211; B60K 35/22; B60K 35/23;
G02B 27/0093; G02B 27/0101; G02B 30/28;
G02B 30/31; G09G 3/002; H04N 13/31;
H04N 13/363; H04N 13/366;** B60K 2360/149;

(Cont.)

(86) International application number:
**PCT/JP2019/042128**

(87) International publication number:
**WO 2020/090714 (07.05.2020 Gazette 2020/19)**

(54) **RADIO COMMUNICATION HEAD-UP DISPLAY SYSTEM, RADIO COMMUNICATION EQUIPMENT, MOVING BODY, AND PROGRAM**

HEADUP-ANZEIGESYSTEM MIT FUNKKOMMUNIKATION, FUNKKOMMUNIKATIONSGERÄT, BEWEGLICHER KÖRPER UND PROGRAMM

SYSTÈME D'AFFICHAGE TÊTE HAUTE DE COMMUNICATION RADIO, ÉQUIPEMENT DE COMMUNICATION RADIO, CORPS MOBILE ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.11.2018 JP 2018207598**

(43) Date of publication of application:
**08.09.2021 Bulletin 2021/36**

(73) Proprietor: **Kyocera Corporation
Kyoto-shi, Kyoto 612-8501 (JP)**

(72) Inventors:
• **KUSAFUKA Kaoru
Kyoto-shi, Kyoto 612-8501 (JP)**
• **HASHIMOTO Sunao
Kyoto-shi, Kyoto 612-8501 (JP)**

(74) Representative: **Viering, Jentschura & Partner mbB
Patent- und Rechtsanwälte
Am Brauhaus 8
01099 Dresden (DE)**

(56) References cited:
EP-A1- 2 930 658       WO-A1-2014/093100
WO-A1-2017/134861    WO-A1-2018/139611
WO-A1-2018/199185    WO-A1-2018/199185
JP-A- 2016 070 951      US-A1- 2017 046 880

(52) Cooperative Patent Classification (CPC): (Cont.)
B60K 2360/1526; G02B 2027/0187

**Description**

Technical Field

The present disclosure relates to radio communication head-up display systems, radio communication devices, moving bodies, and programs.

Background Art

In the related art, a three-dimensional display device including an optical element that causes part of light emitted from a display panel to arrive at a right eye and causes other part of the light emitted from the display panel to arrive at a left eye to carry out 3D display without using glasses has been known (see Patent Literature 1).
Moreover, WO 2018/199185 A1, US 2017/046880 A1, WO 2014/093100 A1, EP 2930658 A1 and WO 2018/139611 A1 also disclose display devices.

Citation List

Patent Literature

Patent Literature 1: Japanese Unexamined Patent Publication JP-A 2001-166259

Summary of Invention

**[0005]** to [0008] The present invention provides a radio communication device according to claim 1, a radio communication device according to claim 2, a radio communication head-up display system according to claim 3, a moving body according to claim 5, a program according to claim 6, and a program according to claim 7. A preferred embodiment is disclosed in the dependent claim.

Brief Description of Drawings

FIG. 1 is a diagram illustrating an example of a radio communication head-up display system mounted on a moving body;
FIG. 2 is a diagram illustrating a schematic configuration of a radio communication device and a head-up display illustrated in FIG. 1;
FIG. 3 is a diagram illustrating an example in which a display panel illustrated in FIG. 2 is viewed from a depth direction;
FIG. 4 is a diagram illustrating an example in which a parallax barrier illustrated in FIG. 2 is viewed in the depth direction;
FIG. 5 is a diagram for explaining a relation between a virtual image and the eyes of a user, as illustrated in FIG. 1;
FIG. 6 is a flowchart illustrating a first example of a process flow of a first controller illustrated in FIG. 3;
FIG. 7 is a flowchart illustrating a second example of the process flow of the first controller illustrated in FIG. 3;
FIG. 8 is a flowchart illustrating a third example of the process flow of the first controller illustrated in FIG. 3;
FIG. 9 is a diagram illustrating a positional relation between a three-dimensional display device and the eyes of the user when a user directly views a display panel; and
FIG. 10 is a diagram illustrating a schematic configuration of a three-dimensional display device when an optical element is a lenticular lens.

Description of Embodiments

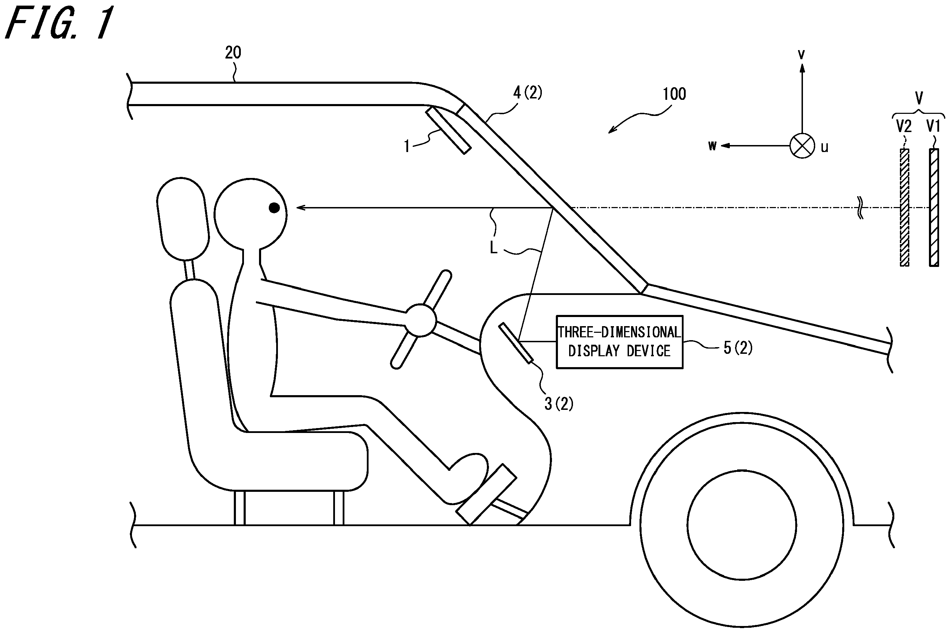

It is preferable that image light arrives at the eye-positions of the eyes of a user appropriately so that the user appropriately views a virtual image of an image projected by a head-up display.
The disclosure provides a radio communication head-up display system, a radio communication device, a moving body, and a program capable of causing a user to view a virtual image appropriately.
Hereinafter, an embodiment of the disclosure will be described with reference to the drawings. The drawings used for the following description are schematic and dimensional ratios or the like on the drawings do not necessarily match the actual dimensional ratios or the like.
A radio communication head-up display (HUD) system 100 according to an embodiment of the disclosure includes a radio communication device 1 and a head-up display (HUD) 2, as illustrated in FIG. 1. The communication HUD system 100 may be mounted on a moving body 20.

In the disclosure, examples of the "moving body" include vehicles, ships, and airplanes. In the disclosure, examples of "vehicles" include automobiles and industrial vehicles, but the disclosure is not limited thereto. The examples of "vehicles" may include railway vehicles, daily life vehicles, and fixed-wing aircrafts taxiing on the ground. Examples of automobiles include passenger cars, trucks, buses, motorcycles, and trolley buses, but the disclosure is not limited thereto. Examples of automobiles include other vehicles traveling on roads. Examples of the industrial vehicles include industrial vehicles for agriculture and construction. Examples of the industrial vehicles include forklifts and golf carts, but the disclosure is not limited thereto. Examples of the industrial vehicles for agriculture include tractors, tillers, transplanters, binders, combine harvesters, lawn mowers, but the disclosure is not limited thereto. Examples of the industrial vehicles for construction include bulldozers, scrapers, shovel cars, crane trucks, dump cars, and road rollers, but the disclosure is not limited thereto. Examples of vehicles include things traveling with manpower. The classification of the vehicles is not limited to the above-described vehicles. For example, the automobiles may include industrial vehicles which can travel on roads or may include the same vehicles classified into a plurality of classes . Examples of the ships in the disclosure include marine jets, boats, and tankers. Examples of the airplanes include fixed-wing aircrafts and rotary-wing aircrafts.

As the radio communication device 1, a general-purpose radio communication terminal such as a mobile phone, a smartphone, or a tablet terminal can be adopted. The radio communication device 1 includes an imaging optical system 10, an imaging element 11, a first controller (controller) 12, a motion sensor 13, and a first communication module (communication module) 14.

The radio communication device 1 is disposed so that both eyes of a user are located opposite to the imaging element 11 of the imaging optical system 10. When the communication HUD system 100 is mounted on the moving body 20, the radio communication device 1 may be mounted on, for example, a rearview mirror. The radio communication device 1 may be mounted on, for example, a dashboard of the moving body 20. The radio communication device 1 may be mounted on a center panel. The radio communication device 1 may be mounted on a support portion of a steering wheel.

The imaging optical system 10 includes one or more lenses . The imaging optical system 10 is disposed so that an optical axis of the imaging optical system 10 is perpendicular to an imaging surface of the imaging element 11. The imaging optical system 10 is configured to image light incident from a subject as a subject image on the imaging surface of the imaging element 11.

The imaging element 11 may include, for example, a CCD (Charged Coupled Device) imaging element or a CMOS (Complementary Metal Oxide Semiconductor) imaging element. The imaging element 11 is configured to convert an image formed by the imaging optical system 10 into image information and generate an image.

The first controller 12 is connected to each constituent of the radio communication device 1 and controls each constituent. Constituents controlled by the first controller 12 include the imaging element 11, the first controller 12, the motion sensor 13, and the first communication module 14. The first controller 12 is configured as, for example, a processor. The first controller 12 may include one or more processors. The processors may include a general-purpose processor that reads a specific program and carries out a specific function and a dedicated processor specialized for a specific process. The dedicated processor may include an application specific IC (ASIC: application specific integrated circuit). The processor may include a programmable logic device (PLD). The PLD may include a FPGA (Field-Programmable Gate Array). The first controller 12 may be one of a SoC (System-on-a-Chip) and a SiP (System In a Package ) in which a plurality of processors cooperate.

The details of the first controller 12 will be described in detail later.

The motion sensor 13 is configured to detect a parameter indicating a motion of the radio communication device 1 including the motion sensor 13. The motion sensor 13 is, for example, an acceleration sensor or an angular acceleration sensor. The parameter indicating a motion includes, for example, acceleration, a temporal change in acceleration, an angular acceleration, and a temporal change in angular acceleration.

The first communication module 14 is configured to be able to communicate with the three-dimensional display device 5. A communication scheme used for communication between the first communication module 14 and the three-dimensional display device 5 may be a short-range radio communication standard or a radio communication standard connected to a mobile phone network or may be a wired communication standard. Examples of the short-range wireless communication standard may include WiFi (registered trademark), Bluetooth (registered trademark), infrared light, and NFC (Near Field Communication). Examples of the wireless communication standard connected to a mobile phone network may include long term evolution (LTE), a fourth-generation mobile communication system, or a fifth-generation mobile communication system.

The HUD 2 includes one or more reflectors 3, an optical member 4, and the three-dimensional display device 5. The reflector 3 and the optical member 4 are referred to as an optical system.

The reflector 3 is configured to reflect image light emitted from the three-dimensional display device 5, toward a predetermined region of the optical member 4. The predetermined region is a region in which the image light reflected from the predetermined region heads for the eyes of the user. The predetermined region can be determined in accordance with the direction of the eyes of the user to the optical member 4 and a direction of incidence of the image light to the optical member 4. The reflector 3 includes one or more reflection elements.

Each reflection element may be a mirror. When the reflection element is a mirror, the mirror may be, for example, a concave mirror. In FIG. 1, the reflector 3 is displayed as one mirror. However, the disclosure is not limited thereto, and the reflector 3 may be configured by one or more mirrors.

The optical member 4 is configured to reflect the image light which is emitted from the three-dimensional display device 5 and reflected from the reflector 3, toward the left eye (a first eye) and the right eye (a second eye) of the user. For example, a windshield of the moving body 20 may also serve as the optical member 4. Accordingly, the HUD 2 is configured so that the light emitted from the three-dimensional display device 5 travels to the left eye and the right eye of the user along an optical path L. The user can view light arriving along the optical path L as a virtual image V.

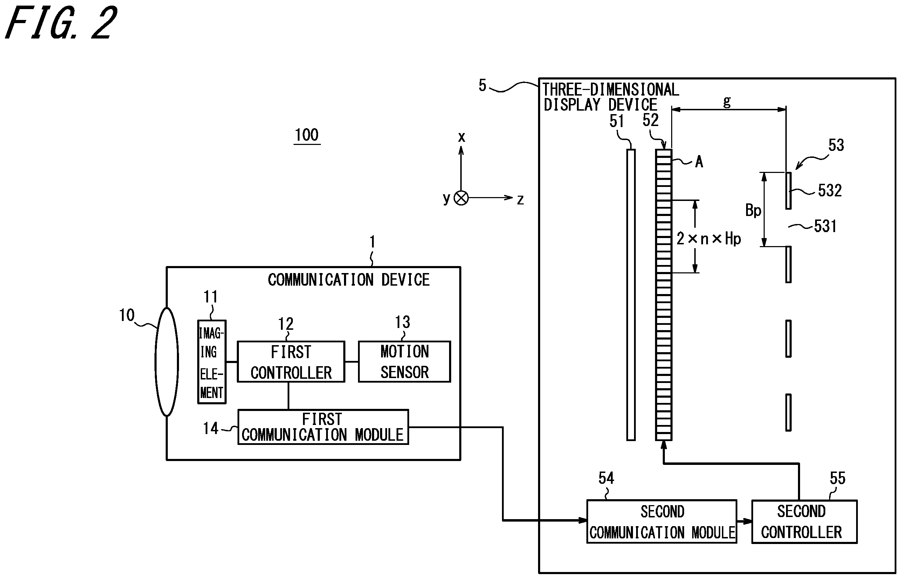

As illustrated in FIG. 2, the three-dimensional display device 5 can include a second communication module 54, a second controller 55, an irradiator 51, a display panel 52, and a parallax barrier 53 serving as an optical element. In the configuration in which the HUD 2 is mounted on the moving body 20, the three-dimensional display device 5 may be stored in a cluster of the moving body 20.

The second communication module 54 can communicate with the first communication module 14 according to the same communication standard as the first communication module 14 of the radio communication device 1. The second communication module 54 is configured to receive various kinds of information transmitted from the first communication module 14.

The second controller 55 is connected to each constituent of the HUD 2 to control each constituent. The constituents controlled by the second controller 55 include the irradiator 51, the display panel 52, and the second communication module 54. The second controller 55 may include one or more processors . The second controller 55 may include a general-purpose processor that reads a specific program and carries out a specific function and a dedicated processor specified for a specific process. The dedicated processor may include an ASIC. The processor may include a PLD. The PLD may include an FPGA. The second controller 55 may be one of SoC and SiP in which one or a plurality of processors cooperate.

The irradiator 51 can planarly irradiate the display panel 52. The irradiator 51 may include a light source, a light-guiding plate, a diffusion plate, and a diffusion sheet. The irradiator 51 is configured to emit irradiation light from the light source and homogenize the irradiation light in a planar direction of the display panel 52 by the light-guiding plate, the diffusion plate, the diffusion sheet, and the like. The irradiator 51 can be configured to emit the homogenized light toward the display panel 52.

As the display panel 52, for example, a display panel such as a transmissive liquid crystal display panel can be adopted. The display panel 52 is not limited to a transmissive liquid crystal display panel and another display panel such as an organic EL can be used. When a self-luminous display panel is used as the display panel 52, the three-dimensional display device 5 may not include the irradiator 51. The display panel 52 will be described as a liquid crystal panel.

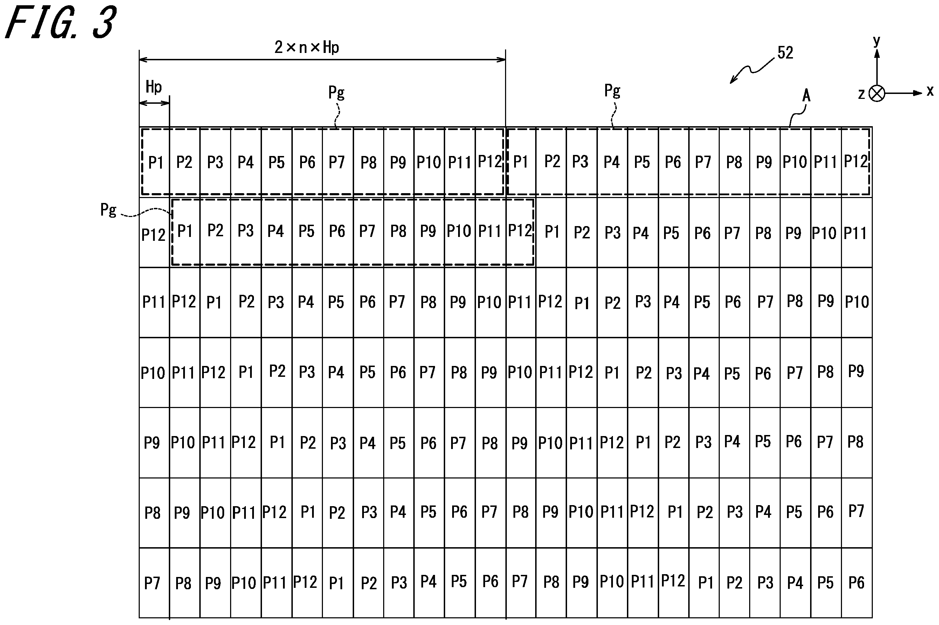

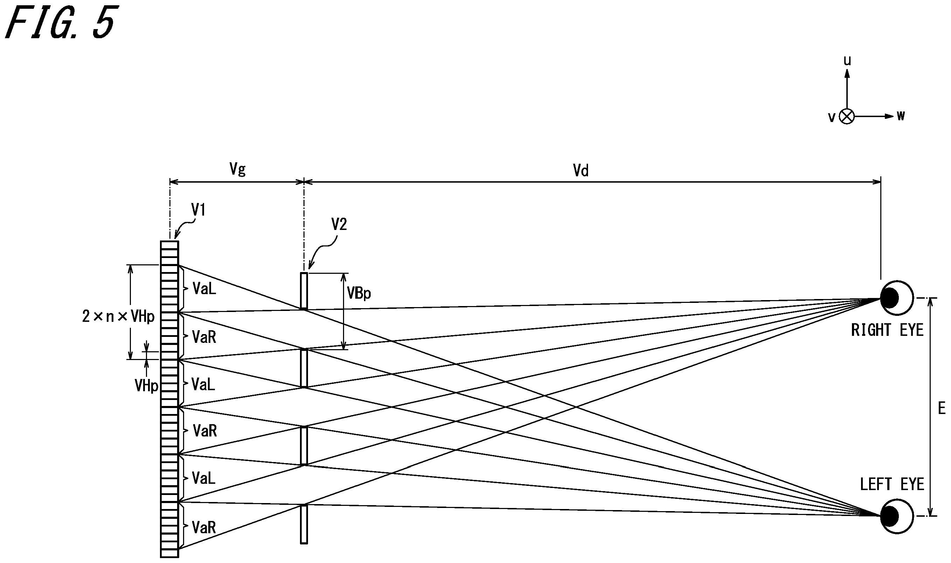

As illustrated in FIG. 3, the display panel 52 includes a plurality of divided regions on an active area A formed in a planar shape. The active area A is configured to display a parallax image. The parallax image includes a left-eye image (a first image) and a right-eye image (a second image) that has a parallax with respect to the left-eye image, as will be described below. The divided regions are regions divided in a first direction and a second direction perpendicular to the first direction. A direction perpendicular to the first and second directions is referred to as a third direction. The first direction may also be referred to as a horizontal direction. The second direction may also be referred to as a vertical direction. The third direction may also be referred to as a depth direction. However, the first, second, and third directions are not limited thereto. In FIGS. 2 to 4, 9, and 10, the first direction is represented as an x axis direction, the second direction is represented as a y axis direction, and the third direction is represented as a z axis direction. In FIGS. 1 and 5, an inter-eye direction which is a direction in which a straight line passing through the left and right eyes of the user is oriented is represented as a u axis direction, an anteroposterior direction of the user is represented as a w axis direction, and a height direction perpendicular to the u axis direction and the w axis direction is represented as a v axis direction.

Each of the divided regions corresponds to one subpixel. Accordingly, the active area A includes a plurality of subpixels arranged in a lattice form in the horizontal and vertical directions.

Each subpixel corresponds to one of red (R), green (G), and blue (B) and a set of three R, G, and B subpixels can constitute one pixel. One pixel can be referred to as one pixel element. The horizontal direction is, for example, a direction in which a plurality of subpixels constituting the one pixel are arranged. The vertical direction is, for example, a direction in which the subpixels of the same color are arranged. The display panel 52 is not limited to the transmissive liquid crystal panel and another display panel such as an organic EL can be used. When a self-luminous display panel is displayed as the display panel 52, the three-dimensional display device 5 may not include the irradiator 51.

The plurality of subpixels arranged in the active area A as mentioned above constitute a subpixel group Pg. The subpixel groups Pg are repeatedly arranged in the horizontal direction. The subpixel groups Pg can be arranged at the same position in the vertical direction and can be arranged to be shifted. For example, the subpixel groups Pg can be repeatedly arranged in the vertical direction to be adjacent to positions shifted by one subpixel in the horizontal direction. The subpixel group Pg includes subpixels in predetermined rows and columns. For example, the subpixel group Pg includes ($2 \times n \times b$) subpixels P1 to P($2 \times n \times b$) in which b subpixels (b rows) in the vertical direction and $2 \times n$ ($2 \times n$ columns) subpixels in the horizontal direction are continuously arranged. In the example illustrated in FIG. 3, n = 6 and b = 1. In the active area A, the subpixel group Pg including twelve subpixels P1 to P12 in which one subpixel in the vertical direction and twelve subpixels in the horizontal direction are continuously arranged is disposed. In the example illustrated in FIG. 3, reference numerals are given to some subpixel group Pg.

The subpixel group Pg is a minimum unit in which the second controller 55 described below carries out control to display an image. The subpixels included in the subpixel group Pg are identified with identification information P1 to P ($2 \times n \times b$). The subpixels P1 to P($2 \times n \times b$) that have the same identification information of the whole subpixel group Pg can be controlled substantially simultaneously by the second controller 55. For example, when an image displayed at the subpixel P1 is switched from a left-eye image to a right-eye image, the second controller 55 simultaneously switches the image displayed at the subpixel P1 in the whole subpixel group Pg from the left-eye image to the right-eye image.

As illustrated in FIG. 2, the parallax barrier 53 can be formed in a planar shape along the active area A, and is disposed away by a predetermined distance from the active area A. The parallax barrier 53 may be positioned on an opposite side of the irradiator 51 with respect to the display panel 52. The parallax barrier 53 may be positioned on the irradiator 51-side with respect to the display panel 52.

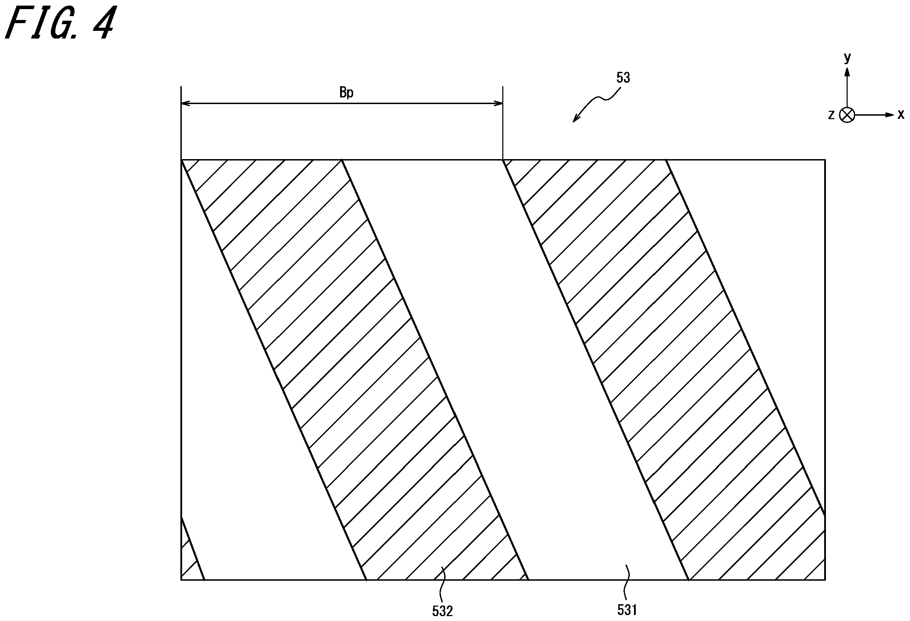

As illustrated in FIG. 4, the parallax barrier 53 is configured to define a propagation direction of the image light emitted from the subpixels for each of light-transmitting regions 531 which are a plurality of strip regions extending in a predetermined direction in the plane. For example, the parallax barrier 53 includes a plurality of dimming regions 532 in which the image light is dimmed. The plurality of dimming regions 532 partition the light-transmitting regions 531 between the adjacent dimming regions 532. The light-transmitting region 531 has higher light transmittance than the dimming region 532. The dimming region 532 has lower light transmittance than the light-transmitting region 531. The light-transmitting region 531 and the dimming region 532 extend in a predetermined direction along the active area A and are alternately arranged repeatedly in a direction perpendicular to the predetermined direction. The predetermined direction is, for example, a direction along a diagonal line of the subpixels, for example. The predetermined direction can be set to a direction which crosses b subpixels in the second direction while crossing a subpixels in the first direction (where a and b are positive relatively prime integers) . The predetermined direction may be the second direction.

As such, when the parallax barrier 53 defines the propagation direction of the image light emitted from the subpixels arranged in the active area A, a region of a first virtual image V1 corresponding to a region on the active area A which can be viewed by the eyes of the user is determined, as illustrated in FIG. 5. Hereinafter, a region in the first virtual image V1 which can be viewed by the user with the image light propagated to the eye-positions of the eyes of the user is referred to as a visible region Va. A region in the first virtual image V1 which can be viewed by the user with the image light propagated to the eye-position of the left eye of the user is referred to as a left visible region VaL (a first visible region). A region in the first virtual image V1 which can be viewed by the user with the image light propagated to the eye-position of the right eye of the user is referred to as a right visible region VaR (a second visible region).

A virtual image barrier pitch VBp and a virtual image gap Vg are defined so that the following expressions (1) and (2) in which a referred view distance Vd is used are established. The virtual image barrier pitch VBp is a disposition interval of a second virtual image V2 of the light-reducing region 532 in a direction corresponding to the first direction. The virtual image gap Vg is a distance between the second virtual image V2 and the first virtual image V1. The referred view distance Vd is a distance between the virtual image V2 and the parallax barrier 53 and the eye-position of each of the right and left eyes of the user indicated by the positional information received from the radio communication device 1. In the expressions (1) and (2), a virtual image barrier aperture width VBw is a width corresponding to the width of the light-transmitting region 531 in the second virtual image V2. An inter-eye distance E is a distance between the right and left eyes. The inter-eye distance E may be in the range of, for example, 61.1 mm to 64.4 mm which are values computed by a study of National Institute of Advanced Industrial Science and Technology. VHp is a length of a virtual image of the subpixels in the horizontal direction. VHp is a length of the subpixel virtual image in the first virtual image V1 in a direction corresponding to the first direction.

E :

$$Vd = (n \times VHp) : Vg \qquad\qquad (1)$$

Vd :

$$VBp = (Vdv + Vg) : (2 \times n \times VHp) \qquad (2)$$

Part of the image light emitted from the active area A of the display panel 52 transmits the light-transmitting region 531 and arrives at the optical member 4 via one or more reflectors 3. The image light arriving at the optical member 4 is reflected by the optical member 4 and arrives at the eyes of the user. Thus, the eyes of the user recognize the first virtual image V1 which is a virtual image of the parallax image displayed in the active area A on the front side of the optical member 4. In the present application, the front side is a direction of the optical member 4 when viewed from the user. The front side is a direction in which the moving body 20 normally moves.

The user apparently recognizes the parallax image as if the user views the first virtual image V1 via the second virtual image V2.

As described above, the positions at which the communication HUD system 100 causes the image light to arrive are different according to the eye-positions of the eyes of the user. The communication HUD system 100 is configured to carry out generation of a captured image, estimation of the eye-positions of the eyes, and determination of the visible region Va so that the user can view the 3D image appropriately while the 3D image is displayed. Hereinafter, the generation of the captured image, the estimation of the eye-positions of the eyes, and the determination of the visible region Va will be described in detail.

<First Example>

(Generation of Captured Image)

When the display panel 52 starts display of the parallax image, the first controller 12 may cause the imaging element 11 to generate a captured image including an image of both eyes of the user with predetermined time intervals.

(Estimation of Eye-positions of Eyes)

The first controller 12 may estimate the eye-positions of the eyes from the captured image generated by the imaging element 11. For example, the first controller 12 may estimate the eye-positions of the eyes in the real space based on a positional relation between the image of a predetermined object included in a single image generated by the imaging element 11 and the image of the eyes. In the configuration in which the radio communication device 1 is mounted in the moving body 20, the predetermined object is an object fixed and attached to the moving body 20 and is, for example, a headrest of a driver seat, a frame of a side window, or the like.

For example, in association with each position on the captured image, the first controller 12 may store a distance and a direction of the predetermined position from the position of the image of the predetermined object in the real space corresponding to the position in association in the memory. In such a configuration, the first controller 12 extracts the eyes from the captured image. The first controller 12 can extract the distance and the direction from the position of the real space corresponding to the position of the image of the predetermined object, which are stored in the memory in association with the eye-positions of the eyes on the captured image. The first controller 12 is configured to estimate the positions in the real space based on the distance and the direction to the positions of the image of the predetermined object.

The first controller 12 may estimate the eye-positions of the eyes in the real space based on the positional relation between the image of the predetermined object included in the single image generated by the imaging element 11 and an image of at least a part of the body of the user. The part of the body may be, for example, a top part of the head, the shoulder, an ear, or the like. In such a configuration, the first controller 12 may estimate the position of a part of the body in the real space based on the positional relation between the image of the predetermined object and the image of the part of the body of the user. The first controller 12 may estimate the eye-positions of the eyes in the real space based on a relative positional relation between the part of the body and the eyes.

The first controller 12 is configured to generate positional information indicating the estimated eye-positions of the eyes. The first controller 12 is configured to carry out control such that the first communication module 14 transmits the positional information to the HUD 2.

(Control of Display Panel)

When the second communication module 54 of the HUD 2 receives the positional information, the second controller 55 is configured to determine the left visible region VaL and the right visible region VaR using the characteristics of the three-dimensional display device 5 and the inter-eye distance E based on the eye-positions of the eyes of the user. The characteristics of the three-dimensional display device 5 are the above-described virtual image barrier pitch VBp and virtual gap Vg, and an image pitch (2 × n × VHp) of the first virtual image V1. When the second controller 55 of the HUD 2 determines the left visible region VaL and the right visible region VaR, the second controller 55 is configured to cause a part of the active area A to display a left-eye image and cause another part of the active area A to display a right-eye image , based on the left visible region VaL and the right visible region VaR. For example, the second controller 55 is configured to cause the subpixels of which most is included in the left visible region VaL more than a predetermined ratio (for example, 50%) to display the left-eye image. The second controller 55 is configured to cause the subpixels of which most is included in the right visible region VaR more than the predetermined ratio to display the right-eye image. The left eye of the user views the virtual image of the left-eye image more than the predetermined ratio and the right eye views the virtual image of the right-eye image more than the predetermined ratio. Since the right-eye image and the left-eye image have a parallax one another and form a parallax image, as described above, the user can view the virtual of the 3D image.

<Second Example>

(Generation of Captured Image)

The first controller 12 may cause the imaging element 11 to generate an image based on the parameter indicating a motion of the radio communication device 1 detected by the motion sensor 13. As described above, the parameter indicating a motion includes, for example, acceleration, a temporal change in acceleration, an angular acceleration, and a temporal change in angular acceleration. The first controller 12 may determine whether the parameter indicating the motion is less than a threshold. When the first controller 12 determines that the parameter indicating the motion is less than the threshold, the first controller 12 is configured to cause the imaging element 11 to generate an image with a first period. When the first controller 12 determines that the parameter indicating the motion is equal to or greater than the threshold, the first controller 12 is configured to cause the imaging element 11 to generate an image with a second period shorter than the first period. The threshold is a value at which, when the parameter indicating the motion is less than the threshold, a frequency of a change in the eye-positions of the eyes of the user is less than when the parameter indicating the motion is equal to or greater than the threshold. The threshold can be set in advance by experiments or the like. The first controller 12 may cause the imaging element 11 to generate an image in a shorter period as the parameter indicating the motion is greater.

The estimation of the eye-positions of the eyes and the control of the display panel in the second example are the same as those of the first example.

<Third Example>

(Generation of Captured Image)

The first controller 12 may cause the imaging element 11 to generate an image based on the parameter indicating the motion of the radio communication device 1 detected by the motion sensor 13. For example, the first controller 12 may determine whether the parameter indicating the motion is equal to or greater than the threshold. When the first controller 12 determines that the parameter indicating the motion is equal to or greater than the threshold, the first controller 12 may cause the imaging element 11 to generate an image.

The estimation of the eye-positions of the eyes and the control of the display panel in the third example are the same as those of the first example.

<Process Flow in First Example>

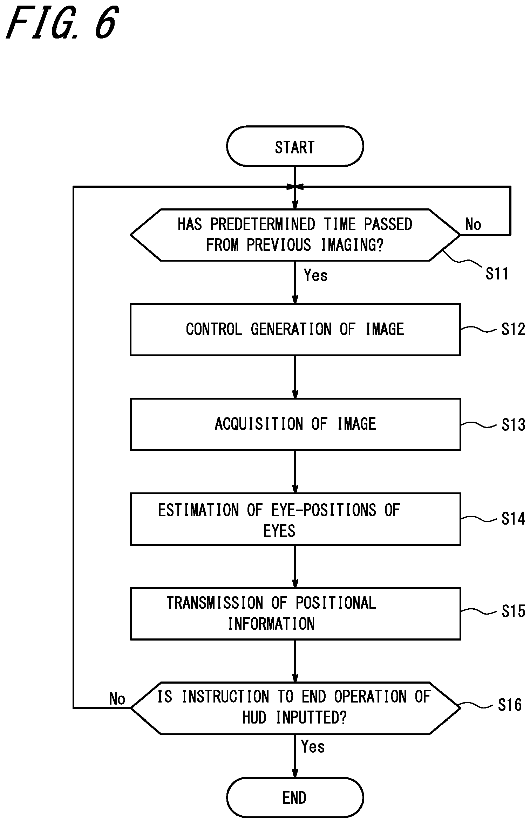

Next, an operation carried out by the first controller 12 of the radio communication device 1 in the first example will be described in detail with reference to FIG. 6. The first controller 12 starts a process when a starting instruction to start the process is inputted to the HUD 2.

First, the first controller 12 determines whether a predetermined time has passed from the previous imaging (step S11) .

When the first controller 12 determines that the predetermined time has passed from the previous imaging, the first controller 12 causes the imaging element 11 to generate an image (step S12).

The first controller 12 acquires the image captured by the imaging element 11 (step S13).

When the image is acquired in step S13, the first controller 12 estimates the eye-positions of the eyes of the user based on the image (step S14).

When the eye-positions of the eyes are estimated in step S14, the first controller 12 transmits positional information indicating the eye-positions of the eyes, to the HUD 2 (step S15) .

The first controller 12 determines whether an operation ending instruction to end the operation of the radio communication device 1 is inputted (step S16).

When the first controller 12 determines in step S16 that the ending instruction is inputted, the first controller 12 ends the process. When the first controller 12 determines in step S16 that the ending instruction is not inputted, the process returns to step S11, and the first controller 12 repeats the process.

<Process Flow in Second Example>

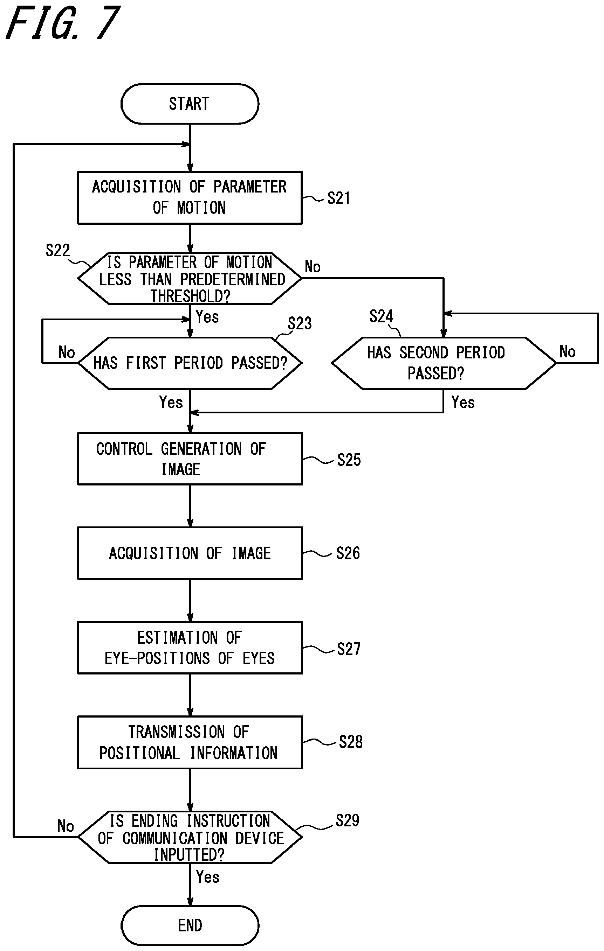

Next, an operation carried out by the first controller 12 of the radio communication device 1 in the second example will be described in detail with reference to FIG. 7.

The first controller 12 acquires the parameter indicating the motion of the radio communication device 1 estimated by the motion sensor 13 (step S21).

When the first controller 12 acquires the parameter indicating the motion in step S21, the first controller 12 determines whether the parameter indicating the motion is less than the predetermined threshold (step S22).

When the first controller 12 determines in step S22 that the parameter indicating the motion is less than the predetermined threshold, the first controller 12 determines whether the first period has passed after the imaging element 11 has generated the image previously (step S23).

When the first controller 12 determines in step S23 that the first period has not passed, the first controller 12 repeats the process of step S23 until the first period passes.

When the first controller 12 determines in step S22 that the parameter indicating the motion is equal to or greater than the predetermined threshold, the first controller 12 determines whether the second period has passed after the imaging element 11 has generated the image previously (step S24).

When the first controller 12 determines in step S24 that the second period has not passed, the first controller 12 repeats the process of step S24 until the second period passes.

When the first controller 12 determines in step S23 that the first period has passed or determines in step S24 that the second period has passed, the first controller 12 causes the imaging element 11 to generate an image (step S25).

The first controller 12 acquires the captured image generated by the imaging element 11 (step S26).

When the captured image is acquired in step S26, the first controller 12 estimates the eye-positions of the eyes of the user based on the captured image (step S27).

When the eye-positions of the eyes are estimated in step S14, the first controller 12 transmits the positional information indicating the eye-positions of the eyes, to the HUD 2 (step S28).

The first controller 12 determines whether an ending instruction to end the operation of the radio communication device 1 is inputted (step S29).

When the first controller 12 determines in step S29 that the instruction to end the operation is inputted, the process ends. When the first controller 12 determines in step S29 that that the instruction to end the operation is not inputted, the process returns to step S21 and the first controller 12 repeats the process.

<Process Flow in Third Example>

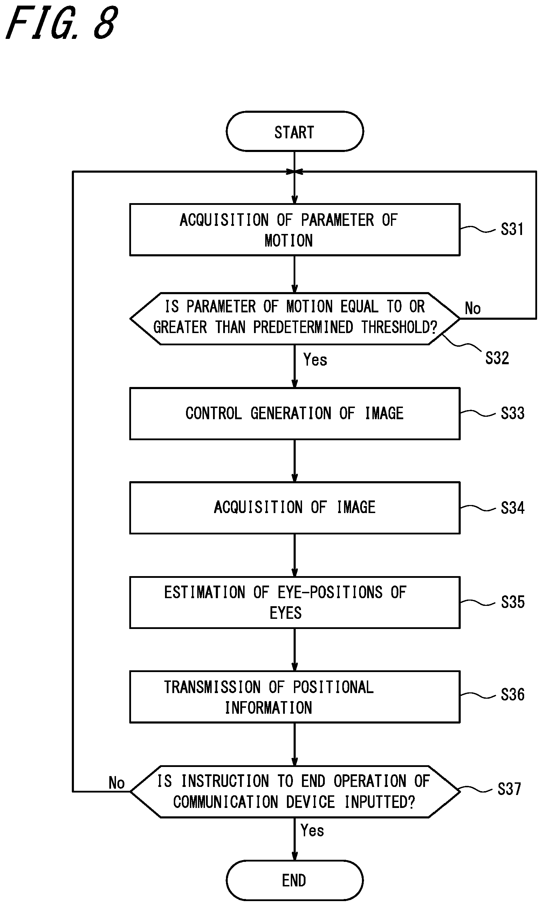

Next, an operation carried out by the first controller 12 of the radio communication device 1 in the third example will be described in detail with reference to FIG. 8.

First, the first controller 12 acquires the parameter indicating the motion from the motion sensor 13 (step S31).

When the first controller 12 acquires the parameter indicating the motion from the motion sensor 13, the first controller 12 determines whether the parameter indicating the motion is equal to or greater than the threshold (step S32).

When the first controller 12 determines in step S32 that the parameter indicating the motion is equal to or greater than the threshold, the first controller 12 causes the imaging element 11 to generate a captured image (step S33).

When the captured image is generated in step S33, the first controller 12 carries out the processes from steps S34 to S37. The processes from steps S33 to S37 are the same as the processes from steps S13 to S16 of the first example.

As the communication device 1 according to the above-described embodiment, an information processing device such as a mobile phone, a smartphone, or a table terminal can be adopted. The information processing device can be realized by storing a program that describes processing content for realizing each function of the radio communication device 1 according to the embodiment in a memory of the information processing device and causing a processor of the information processing device to read and execute the program. The radio communication device 1 may be configured to read and mount the program from a non-transitory computer-readable medium. The non-transitory computer-readable medium includes a magnetic storage medium, an optical storage medium, a magneto-optical storage medium, and a semiconductor storage medium, but the disclosure is not limited thereto. The magnetic storage medium includes a magnetic disk, a hard disk, and a magnetic tape. The optical storage medium includes an optical disc such as a CD (Compact Disc), a DVD, a Blu-ray (registered trademark) disc. The semiconductor storage medium includes a ROM (Read Only Memory), an EEPROM (Electrically Erasable Programmable Read-Only Memory), a flash memory.

As described above, in the embodiment, the radio communication device 1 is configured to estimate the eye-positions of the eyes of the user based on the captured image. The HUD 2 is configured to control the parallax image displayed on the display panel 52 based on the eye-positions of the eyes estimated by the radio communication device 1. For example, even when the eye-positions of the eyes of the user are changed, the image light can arrive at the eye-positions of the eyes. Accordingly, the user can view the 3D image appropriately.

In the embodiment, the first controller 12 is configured to cause the imaging element 11 to generate a captured image with the predetermined period and estimate the eye-positions of the eyes of the user based on the captured image. Even when the eye-positions of the eyes of the user estimated in the initial setting are changed during a normal operation of the HUD 2, the present eye-positions of the eyes of the user can be estimated based on the newly captured image. The HUD 2 can appropriately display the parallax image on the display panel 52 based on the present eye-positions of the eyes of the user. As a result, the user can appropriately view the 3D image even when the eye-positions of the eyes are changed.

In the embodiment, the first controller 12 causes the imaging element 11 to generate a captured image with the period which is based on the parameter indicating the motion. An operation of the radio communication device 1 indicated by an index is associated with an operation of the moving body 20 in which the radio communication device 1 is placed. The operation of the moving body 20 is associated with an operation of the user getting in the moving body 20. Therefore, when the parameter indicating the motion, for example, acceleration, is high, there is a high possibility of the eye-positions of the eyes of the user being moving. Accordingly, by causing the imaging element 11 to generate a captured image with the period which is based on the parameter indicating the motion, the first controller 12 can estimate the eye-positions of the eyes at a frequency in accordance with a change possibility. As a result, the first controller 12 can appropriately estimate the change in the eye-positions of the eyes while reducing a load necessary to control the imaging element 11.

The above-described embodiment has been described as a representative example, but it should be apparent to those skilled in the art that many changes and substitutions can be made without departing from the scope of the claims. For example, the plurality of configuration blocks described in the embodiment and the example can be combined into one configuration block or one configuration block can be divided.

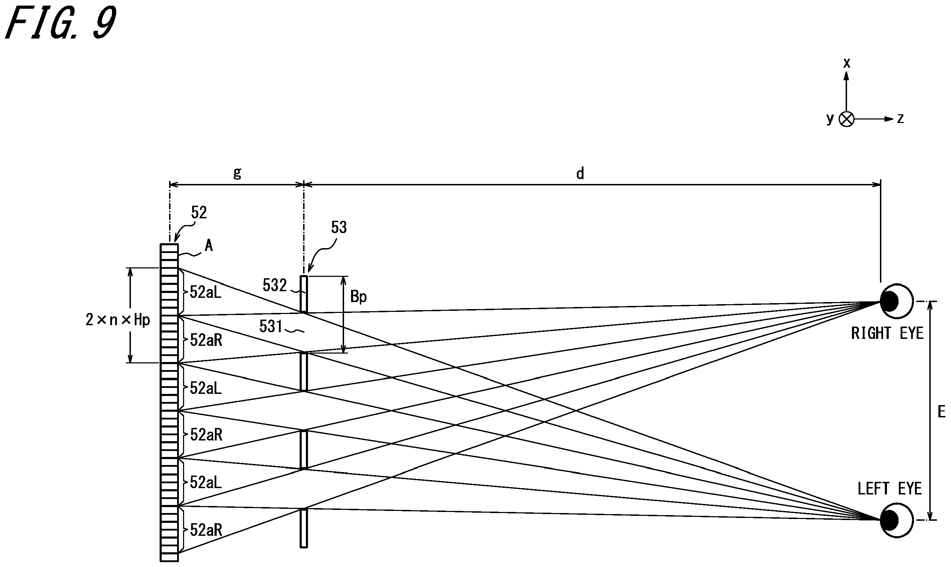

For example, as illustrated in FIG. 9, the three-dimensional display device 5 may be disposed so that the image light emitted from the display panel 52 transmits the light-transmitting region 531 of the parallax barrier 53 and directly arrives at the eyes of the user without being involved in the reflector 3 and the optical member 4. In such a configuration, as in the above-described configuration, the second controller 55 can be configured to cause a part of the active area A to display the left-eye image and cause the remaining part of the active area A to display the right-eye image, based on visible area information received by the second communication module 54. For example, the second controller 55 causes the subpixels of which most is included in a left visible region 52aL on the active area A indicated by the visible area information more than a predetermined ratio (for example, 50%) to display a left-eye image. The second controller 55 causes the subpixels of which most is included in a right visible region 52aR indicated by the visible area information more than the predetermined ratio to display a right-eye image. The left eye of the user views a virtual image of the left-eye image more than a virtual image of the right-eye image and the right eye views the virtual image of the right-eye image more than the virtual image of the left-eye image. As described above, the right-eye image and the left-eye image have a parallax one another and form a parallax image. Accordingly, the user views a 3D image.

For example, in the above-described embodiment, the second controller 55 of the HUD 2 determines the left visible region VaL and the right visible region VaR, but the present invention is not limited thereto. The first controller 12 of the communication device 1 may determine the left visible region VaL and the right visible region VaR using the characteristics of the three-dimensional display device 5 and the inter-eye distance E based on the eye-positions of the eyes of the user. In such a configuration, the first controller 12 may generate visible region information indicating the left visible region VaL and the right visible region VaR and cause the first communication module 14 to transmit the visible region information. The second controller 55 of the HUD 2 may cause the display panel 52 to display the parallax image, based on the driving information transmitted from the first communication module 14.

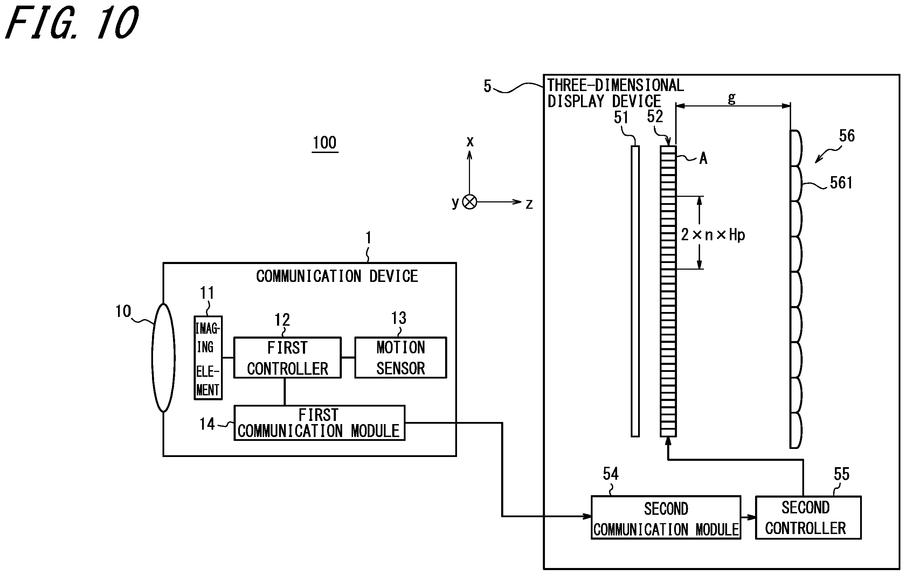

For example, in the above-described embodiment, the optical element is the parallax barrier 53, but the present invention is not limited thereto. For example, as illustrated in FIG. 10, the optical element may be a lenticular lens 56. Here, the lenticular lens 624 is configured so that a cylindrical lens 561 extending in the perpendicular direction are arranged in the horizontal direction on a plane. The lenticular lens 56 causes image light emitted from some subpixels to propagate to the position of the left eye of the user and causes image light emitted from some other subpixels to propagate to the position of the right eye of the user as in the parallax barrier 53.

Reference Signs List

**EP 3 876 224 B1**

1: Radio communication device
2: Head-up display
3: Reflector
4: Optical member
5: Three-dimensional display device
10: Imaging optical system
11: Imaging element
12: First controller
13: Motion sensor
14: First communication module
20: Moving body
51: Irradiator
52: Display panel
53: Parallax barrier
54: Second communication module
55: Second controller
56: Lenticular lens
531: Light-transmitting region
532: Dimming region
561: Cylindrical lens
A: Active area
V1: First virtual image
V2: Second virtual image
VaL: Left visible region
VaR: Right visible region
52aL: Left visible region
52aR: Right visible region
100: Radio communication head-up display system

**Claims**

1.  A radio communication device (1), comprising:

    an imaging element (11) configured to repeatedly generate a captured image;
    a first controller (12) configured to estimate eye-positions of eyes of a user based on the captured image; and
    a first communication module (14) configured to transmit positional information indicating eye-positions of the eyes of the user, to a head-up display (2) configured to display a parallax image based on the positional information,
    **characterized in that**
    the radio communication device (1) comprises a motion sensor (13) configured to detect a parameter indicating a motion of the radio communication device (1),
    the first controller (12) causes the imaging element (11) to generate a captured image based on the parameter indicating the motion,
    in a case where the parameter indicating the motion is less than a threshold, the first controller (12) causes the imaging element (11) to generate a captured image after a first period, and
    in a case where the parameter indicating the motion is equal to or greater than the threshold, the first controller (12) causes the imaging element (11) to generate a captured image after a second period shorter than the first period.

2.  A radio communication device (1), comprising:

    an imaging element (11) configured to repeatedly generate a captured image;
    a first controller (12) configured to estimate eye-positions of eyes of a user based on the captured image; and
    a first communication module (14) configured to transmit positional information indicating eye-positions of the eyes of the user, to a head-up display (2) configured to display a parallax image based on the positional information,
    **characterized in that**

the radio communication device (1) comprises a motion sensor (13) configured to detect a parameter indicating a motion of the radio communication device (1), and

the first controller (12) causes the imaging element (11) to generate a captured image based on the parameter indicating the motion,

in a case where the parameter indicating the motion is equal to or greater than a threshold, the first controller (12) causes the imaging element (11) to generate a captured image, and

in a case where the parameter indicating the motion is less than the threshold, the first controller (12) causes the imaging element (11) not to generate a captured image.

3. A radio communication head-up display system (100), comprising:

the radio communication device (1) according to claim 1 or 2; and
a head-up display (2),
the head-up display (2) comprising

a display panel (52) configured to display a parallax image,
an optical element configured to define a propagation direction of image light emitted from the display panel (52),
an optical system configured to project the image light whose propagation direction is defined by the optical element, toward a direction of the eyes of the user,
a second communication module (54) configured to receive the eye-positions of the eyes from the first communication module (14), and
a second controller (55) configured to control the parallax image displayed on the display panel (52), based on the eye-positions of the eyes received by the second communication module (54).

4. The radio communication head-up display system (100) according to claim 3, wherein the first controller (12) causes the imaging element (11) to generate a captured image with a predetermined period and estimates the eye-positions of the eyes of the user based on the captured image.

5. A moving body, comprising:

the radio communication head-up display system (100) according to claim 3,
the radio communication device (1) comprising
a reflector (3) configured to reflect the image light whose propagation direction is defined by the optical element, toward the user.

6. A program executed by a radio communication device (1) of a radio communication head-up display system (100) comprising the radio communication device (1) and a head-up display (2),

the radio communication device (1) comprising an imaging element (11), a controller (12, 55), a communication module (14, 54), and a motion sensor (13) configured to detect a parameter indicating a motion,
the program causing the controller (12, 55) to control such that the imaging element (11) repeatedly generates a captured image based on the parameter indicating the motion and eye-positions of eyes of a user are estimated based on the captured image, and
to control such that the communication module (14, 54) transmits positional information indicating eye-positions of the eyes of the user, to the head-up display (2) that displays a parallax image based on the positional information,
**characterized in that**
in a case where the parameter indicating the motion is less than a threshold, the controller (12, 55) causes the imaging element (11) to generate a captured image after a first period, and
in a case where the parameter indicating the motion is equal to or greater than the threshold, the controller (12, 55) causes the imaging element (11) to generate a captured image after a second period shorter than the first period.

7. A program executed by a radio communication device (1) of a radio communication head-up display system (100) comprising the radio communication device (1) and a head-up display (2),

the radio communication device (1) comprising an imaging element (11), a controller (12, 55), a communication module (14, 54), and a motion sensor (13) configured to detect a parameter indicating a motion, the program causing the controller (12, 55) to control such that the imaging element (11) repeatedly generates a captured image based on the parameter indicating the motion and eye-positions of eyes of a user are estimated based on the captured image, and

to control such that the communication module (14, 54) transmits positional information indicating eye-positions of the eyes of the user, to the head-up display (2) that displays a parallax image based on the positional information,

**characterized in that**

in a case where the parameter indicating the motion is equal to or greater than a threshold, the controller (12, 55) causes the imaging element (11) to generate a captured image, and

in a case where the parameter indicating the motion is less than the threshold, the controller (12, 55) causes the imaging element (11) not to generate a captured image.

**Patentansprüche**

1. Funkkommunikationsvorrichtung (1), aufweisend:

ein Abbildungselement (11), das konfiguriert ist, um wiederholt ein erfasstes Bild zu erzeugen,

einen ersten Controller (12), der konfiguriert ist, um Augenpositionen von Augen eines Benutzers basierend auf dem erfassten Bild zu schätzen, und

ein erstes Kommunikationsmodul (14), das konfiguriert ist, um eine Positionsinformation, die Augenpositionen der Augen des Benutzers anzeigt, an eine Head-up-Anzeige (2) zu senden, die konfiguriert ist, um ein Parallaxenbild basierend auf der Positionsinformation anzuzeigen,

**dadurch gekennzeichnet, dass**

die Funkkommunikationsvorrichtung (1) einen Bewegungssensor (13) aufweist, der konfiguriert ist, um einen Parameter zu detektieren, der eine Bewegung der Funkkommunikationsvorrichtung (1) anzeigt,

der erste Controller (12) das Abbildungselement (11) veranlasst, ein erfasstes Bild basierend auf dem Parameter zu erzeugen, der die Bewegung anzeigt,

in einem Fall, in dem der die Bewegung anzeigende Parameter kleiner als ein Schwellenwert ist, der erste Controller (12) das Abbildungselement (11) veranlasst, ein erfasstes Bild nach einer ersten Periode zu erzeugen, und

in einem Fall, in dem der die Bewegung anzeigende Parameter größer oder gleich dem Schwellenwert ist, der erste Controller (12) das Abbildungselement (11) veranlasst, ein erfasstes Bild nach einer zweiten Periode zu erzeugen, die kürzer als die erste Periode ist.

2. Funkkommunikationsvorrichtung (1), aufweisend:

ein Abbildungselement (11), das konfiguriert ist, um wiederholt ein erfasstes Bild zu erzeugen,

einen ersten Controller (12), der konfiguriert ist, um Augenpositionen von Augen eines Benutzers basierend auf dem erfassten Bild zu schätzen,

und

ein erstes Kommunikationsmodul (14), das konfiguriert ist, um eine Positionsinformation, die Augenpositionen der Augen des Benutzers anzeigt, an eine Head-up-Anzeige (2) zu senden, die konfiguriert ist, um ein Parallaxenbild basierend auf der Positionsinformation anzuzeigen,

**dadurch gekennzeichnet, dass**

die Funkkommunikationsvorrichtung (1) einen Bewegungssensor (13) aufweist, der konfiguriert ist, um einen Parameter zu detektieren, der eine Bewegung der Funkkommunikationsvorrichtung (1) anzeigt, und

der erste Controller (12) das Abbildungselement (11) veranlasst, ein erfasstes Bild basierend auf dem die Bewegung anzeigenden Parameter zu erzeugen,

in einem Fall, in dem der Parameter, der die Bewegung anzeigt, größer oder gleich einem Schwellenwert ist, der erste Controller (12) das Abbildungselement (11) veranlasst, ein erfasstes Bild zu erzeugen, und

in einem Fall, in dem der die Bewegung anzeigende Parameter kleiner als der Schwellenwert ist, der erste Controller (12) das Abbildungselement (11) veranlasst, kein erfasstes Bild zu erzeugen.

3. Funkkommunikations-Head-up-Anzeige-System (100), aufweisend:

die Funkkommunikationsvorrichtung (1) gemäß Anspruch 1 oder 2 und

eine Head-up-Anzeige (2),
wobei die Head-up-Anzeige (2) aufweist:

ein Anzeigepanel (52), das konfiguriert ist, um ein Parallaxenbild anzuzeigen,
ein optisches Element, das konfiguriert ist, um eine Ausbreitungsrichtung von von dem Anzeigepanel (52) emittiertem Bildlicht zu definieren,
ein optisches System, das konfiguriert ist, um das Bildlicht, dessen Ausbreitungsrichtung durch das optische Element definiert ist, in eine Richtung der Augen des Benutzers zu projizieren,
ein zweites Kommunikationsmodul (54), das konfiguriert ist, um die Augenpositionen der Augen von dem ersten Kommunikationsmodul (14) zu empfangen, und
einen zweiten Controller (55), der konfiguriert ist, um das auf dem Anzeigepanel (52) angezeigte Parallaxenbild basierend auf den von dem zweiten Kommunikationsmodul (54) empfangenen Augenpositionen der Augen zu steuern.

4.  Funkkommunikations-Head-up-Anzeige-System (100) gemäß Anspruch 3, wobei der erste Controller (12) das Abbildungselement (11) veranlasst, ein erfasstes Bild mit einer vorbestimmten Periode zu erzeugen, und die Augenpositionen der Augen des Benutzers basierend auf dem erfassten Bild schätzt.

5.  Bewegungskörper, aufweisend:

das Funkkommunikations-Head-up-Anzeige-System (100) gemäß Anspruch 3,
wobei die Funkkommunikationsvorrichtung (1) aufweist:
einen Reflektor (3), der konfiguriert ist, um das Bildlicht, dessen Ausbreitungsrichtung durch das optische Element definiert ist, in Richtung zu dem Benutzer zu reflektieren.

6.  Programm, das von einer Funkkommunikationsvorrichtung (1) eines Funkkommunikations-Head-up-Anzeige-Systems (100) ausgeführt wird, das die Funkkommunikationsvorrichtung (1) und eine Head-up-Anzeige (2) aufweist,

wobei die Funkkommunikationsvorrichtung (1) ein Abbildungselement (11), einen Controller (12, 55), ein Kommunikationsmodul (14, 54) und einen Bewegungssensor (13) aufweist, der konfiguriert ist, um einen Parameter zu detektieren, der eine Bewegung anzeigt,
wobei das Programm den Controller (12, 55) veranlasst, so zu steuern, dass das Abbildungselement (11) wiederholt ein erfasstes Bild basierend auf dem Parameter, der die Bewegung anzeigt, erzeugt und Augenpositionen von Augen eines Benutzers basierend auf dem erfassten Bild geschätzt werden, und
so zu steuern, dass das Kommunikationsmodul (14, 54) eine Positionsinformation, die Augenpositionen der Augen des Benutzers anzeigt, an die Head-up-Anzeige (2) sendet, die ein Parallaxenbild basierend auf der Positionsinformation anzeigt,
**dadurch gekennzeichnet, dass**
in einem Fall, in dem der Parameter, der die Bewegung anzeigt, kleiner als ein Schwellenwert ist, der Controller (12, 55) das Abbildungselement (11) veranlasst, ein erfasstes Bild nach einer ersten Periode zu erzeugen, und
in einem Fall, in dem der die Bewegung anzeigende Parameter größer oder gleich dem Schwellenwert ist, der Controller (12, 55) das Abbildungselement (11) veranlasst, ein erfasstes Bild nach einer zweiten Periode zu erzeugen, die kürzer als die erste Periode ist.

7.  Programm, das von einer Funkkommunikationsvorrichtung (1) eines Funkkommunikations-Head-up-Anzeige-Systems (100) ausgeführt wird, das die Funkkommunikationsvorrichtung (1) und eine Head-up-Anzeige (2) aufweist,

wobei die Funkkommunikationsvorrichtung (1) ein Abbildungselement (11), einen Controller (12, 55), ein Kommunikationsmodul (14, 54) und einen Bewegungssensor (13) aufweist, der konfiguriert ist, um einen Parameter zu detektieren, der eine Bewegung anzeigt,
das Programm den Controller (12, 55) veranlasst, so zu steuern, dass das Abbildungselement (11) wiederholt ein erfasstes Bild basierend auf dem Parameter erzeugt, der die Bewegung anzeigt, und Augenpositionen von Augen eines Benutzers basierend auf dem erfassten Bild geschätzt werden, und
so zu steuern, dass das Kommunikationsmodul (14, 54) eine Positionsinformation, die Augenpositionen der Augen des Benutzers anzeigt, an die Head-up-Anzeige (2) sendet, die ein Parallaxenbild basierend auf der Positionsinformation anzeigt,
**dadurch gekennzeichnet, dass**
in einem Fall, in dem der Parameter, der die Bewegung anzeigt, größer oder gleich einem Schwellenwert ist, der Controller (12, 55) das Abbildungselement (11) veranlasst, ein erfasstes Bild zu erzeugen, und
in einem Fall, in dem der die Bewegung anzeigende Parameter kleiner als der Schwellenwert ist, der Controller (12, 55) das Abbildungselement (11) veranlasst, kein erfasstes Bild zu erzeugen.

**Revendications**

**1.** Dispositif de radiocommunication (1), comprenant :

un élément d'imagerie (11) configuré pour générer de manière répétée une image capturée ;
un premier contrôleur (12) configuré pour estimer ses positions oculaires des yeux d'un utilisateur sur la base de l'image capturée ; et
un premier module de communication (14) configuré pour transmettre une information de position indiquant des positions oculaires des yeux de l'utilisateur à un affichage tête haute (2) configuré pour afficher une image de parallaxe sur la base de l'information de position,
**caractérisé en ce que**
le dispositif de radiocommunication (1) comprend un capteur de mouvement (13) configuré pour détecter un paramètre indiquant un mouvement du dispositif de radiocommunication (1),
le premier contrôleur (12) amène l'élément d'imagerie (11) à générer une image capturée sur la base du paramètre indiquant le mouvement,
dans un cas où le paramètre indiquant le mouvement est inférieur à un seuil, le premier contrôleur (12) amène l'élément d'imagerie (11) à générer une image capturée après une première période, et
dans un cas où le paramètre indiquant le mouvement est égal ou supérieur au seuil, le premier contrôleur (12) amène l'élément d'imagerie (11) à générer une image capturée après une deuxième période plus courte que la première période.

**2.** Dispositif de radiocommunication (1), comprenant :

un élément d'imagerie (11) configuré pour générer de manière répétée une image capturée ;
un premier contrôleur (12) configuré pour estimer des positions oculaires des yeux d'un utilisateur sur la base de l'image capturée ;
et
un premier module de communication (14) configuré pour transmettre une information de position indiquant des positions oculaires des yeux de l'utilisateur à un affichage tête haute (2) configuré pour afficher une image de parallaxe sur la base de l'information de position,
**caractérisé en ce que**
le dispositif de radiocommunication (1) comprend un capteur de mouvement (13) configuré pour détecter un paramètre indiquant un mouvement du dispositif de radiocommunication (1), et
le premier contrôleur (12) amène l'élément d'imagerie (11) à générer une image capturée sur la base du paramètre indiquant le mouvement,
dans un cas où le paramètre indiquant le mouvement est égal ou supérieur à un seuil, le premier contrôleur (12) amène l'élément d'imagerie (11) à générer une image capturée, et
dans un cas où le paramètre indiquant le mouvement est inférieur au seuil, le premier contrôleur (12) amène l'élément d'imagerie (11) à ne pas générer d'image capturée.

**3.** Système d'affichage tête haute de radiocommunication (100), comprenant :

le dispositif de radiocommunication (1) selon la revendication 1 ou 2 ; et
un affichage tête haute (2),
l'affichage tête haute (2) comprenant :

un panneau d'affichage (52) configuré pour afficher une image de parallaxe,
un élément optique configuré pour définir une direction de propagation de lumière d'image émise par le panneau d'affichage (52),
un système optique configuré pour projeter la lumière d'image dont la direction de propagation est définie par l'élément optique, en direction des yeux de l'utilisateur,
un deuxième module de communication (54) configuré pour recevoir les positions oculaires des yeux du premier module de communication (14), et

un deuxième contrôleur (55) configuré pour contrôler l'image de parallaxe affichée sur le panneau d'affichage (52), sur la base des positions oculaires des yeux reçues par le deuxième module de communication (54) .

4. Système d'affichage tête haute de radiocommunication (100) selon la revendication 3, dans lequel le premier contrôleur (12) amène l'élément d'imagerie (11) à générer une image capturée avec une période prédéterminée et estime les positions oculaires des yeux de l'utilisateur sur la base de l'image capturée.

5. Corps mobile, comprenant :

le système d'affichage tête haute de radiocommunication (100) selon la revendication 3,
le dispositif de radiocommunication (1) comprenant :
un réflecteur (3) configuré pour réfléchir la lumière d'image dont la direction de propagation est définie par l'élément optique, vers l'utilisateur.

6. Programme exécuté par un dispositif de radiocommunication (1) d'un système d'affichage tête haute de radiocommunication (100) comprenant le dispositif de radiocommunication (1) et un affichage tête haute (2),

le dispositif de radiocommunication (1) comprend un élément d'imagerie (11), un contrôleur (12, 55), un module de communication (14, 54) et un capteur de mouvement (13) configuré pour détecter un paramètre indiquant un mouvement,
le programme amenant le contrôleur (12, 55) à commander de telle sorte que l'élément d'imagerie (11) génère de manière répétée une image capturée sur la base du paramètre indiquant le mouvement et que des positions oculaires des yeux d'un utilisateur soient estimées sur la base de l'image capturée, et
à commander de telle sorte que le module de communication (14, 54) transmette une information de position indiquant des positions oculaires des yeux de l'utilisateur à l'affichage tête haute (2) qui affiche une image de parallaxe sur la base de l'information de position,
**caractérisé en ce que**
dans un cas où le paramètre indiquant le mouvement est inférieur à un seuil, le contrôleur (12, 55) amène l'élément d'imagerie (11) à générer une image capturée après une première période, et
dans un cas où le paramètre indiquant le mouvement est égal ou supérieur au seuil, le contrôleur (12, 55) amène l'élément d'imagerie (11) à générer une image capturée après une deuxième période plus courte que la première période.

7. Programme exécuté par un dispositif de radiocommunication (1) d'un système d'affichage tête haute de radiocommunication (100) comprenant le dispositif de radiocommunication (1) et un affichage tête haute (2),

le dispositif de radiocommunication (1) comprenant un élément d'imagerie (11), un contrôleur (12, 55), un module de communication (14, 54) et un capteur de mouvement (13) configuré pour détecter un paramètre indiquant un mouvement,
le programme amenant le contrôleur (12, 55) à commander de telle sorte que l'élément d'imagerie (11) génère de manière répétée une image capturée sur la base du paramètre indiquant le mouvement et que des positions oculaires des yeux d'un utilisateur soient estimées sur la base de l'image capturée, et
à commander de telle sorte que le module de communication (14, 54) transmette une information de position indiquant des positions oculaires des yeux de l'utilisateur à l'affichage tête haute (2) qui affiche une image de parallaxe sur la base de l'information de position,
**caractérisé en ce que**
dans un cas où le paramètre indiquant le mouvement est égal ou supérieur à un seuil, le contrôleur (12, 55) amène l'élément d'imagerie (11) à générer une image capturée, et
dans un cas où le paramètre indiquant le mouvement est inférieur au seuil, le contrôleur (12, 55) amène l'élément d'imagerie (11) à ne pas générer d'image capturée.

# FIG. 1

THREE-DIMENSIONAL DISPLAY DEVICE

EP 3 876 224 B1

EP 3 876 224 B1

# FIG. 2

*FIG. 3*

52

A

Pg

Pg

Pg

$2 \times n \times Hp$

Hp

x
y
z

# FIG. 4

EP 3 876 224 B1

FIG. 5

# FIG. 6

## FIG. 7

```
                    ┌─────────────┐
                    │    START    │
                    └──────┬──────┘
                           │
      ┌────────────────────┤
      │            ┌────────▼─────────┐
      │            │ ACQUISITION OF PARAMETER │─── S21
      │            │     OF MOTION    │
      │            └────────┬─────────┘
      │                     │
      │         S22  ╱──────▼──────────╲      No
      │           ╱  IS PARAMETER OF MOTION ╲──────────────┐
      │           ╲  LESS THAN PREDETERMINED ╱             │
      │           ╲    THRESHOLD?   ╱                      │
      │              ╲──────┬──────╱                       │
      │                    Yes          S24 ╲              │
      │         ┌───────────▼────╲ S23       ╲─────────────▼─────╲    No
      │    No  ╱                   ╲     ╱ HAS SECOND PERIOD       ╲───┐
      ├───────╱ HAS FIRST PERIOD PASSED? ╲  PASSED?                ╱   │
      │       ╲                   ╱     ╲────────────┬──────────╱      │
      │        ╲─────────┬───────╱                   Yes               │
      │                 Yes ◄────────────────────────┘                 │
      │                  │                                             │
      │          ┌───────▼──────────┐                                  │
      │          │ CONTROL GENERATION OF │─── S25                      │
      │          │      IMAGE       │                                  │
      │          └───────┬──────────┘                                  │
      │                  │                                             │
      │          ┌───────▼──────────┐                                  │
      │          │ ACQUISITION OF IMAGE │─── S26                       │
      │          └───────┬──────────┘                                  │
      │                  │                                             │
      │          ┌───────▼──────────┐                                  │
      │          │  ESTIMATION OF   │─── S27                           │
      │          │ EYE-POSITIONS OF EYES │                             │
      │          └───────┬──────────┘                                  │
      │                  │                                             │
      │          ┌───────▼──────────┐                                  │
      │          │ TRANSMISSION OF  │─── S28                           │
      │          │ POSITIONAL INFORMATION │                            │
      │          └───────┬──────────┘                                  │
      │                  │                                             │
      │   No  ╱──────────▼──────────╲ S29                              │
      └──────╱  IS ENDING INSTRUCTION ╲                                │
             ╲ OF COMMUNICATION DEVICE ╱                               │
             ╲     INPUTTED?   ╱                                       │
              ╲───────┬───────╱                                        │
                     Yes                                               │
                      │                                                │
              ┌───────▼──────┐                                         │
              │     END      │                                         │
              └──────────────┘                                         │
```

# FIG. 8

```
                    ┌──────────┐
                    │  START   │
                    └────┬─────┘
                         ↓
         ┌───────────────────────────────┐
    ┌───→│  ACQUISITION OF PARAMETER OF  │────  S31
    │    │            MOTION             │
    │    └───────────────┬───────────────┘
    │                    ↓
    │    ╱───────────────────────────────╲      No
    │   ⟨ IS PARAMETER OF MOTION EQUAL TO OR ⟩─────┐
    │    ╲GREATER THAN PREDETERMINED THRESHOLD?╱    │
    │     ╲─────────────┬─────────────╱  S32        │
    │                   │ Yes                        │
    │                   ↓                            │
    │    ┌───────────────────────────────┐          │
    │    │   CONTROL GENERATION OF IMAGE  │── S33    │
    │    └───────────────┬───────────────┘          │
    │                    ↓                           │
    │    ┌───────────────────────────────┐          │
    │    │      ACQUISITION OF IMAGE      │── S34    │
    │    └───────────────┬───────────────┘          │
    │                    ↓                           │
    │    ┌───────────────────────────────┐          │
    │    │  ESTIMATION OF EYE-POSITIONS OF│── S35    │
    │    │             EYES               │          │
    │    └───────────────┬───────────────┘          │
    │                    ↓                           │
    │    ┌───────────────────────────────┐          │
    │    │   TRANSMISSION OF POSITIONAL   │── S36    │
    │    │          INFORMATION           │          │
    │    └───────────────┬───────────────┘          │
    │                    ↓                           │
    │  No ╱─────────────────────────────╲           │
    └────⟨ IS INSTRUCTION TO END OPERATION OF ⟩── S37 │
         ╲COMMUNICATION DEVICE INPUTTED?╱            │
          ╲───────────┬───────────╱                 │
                      │ Yes                          │
                      ↓                              │
                ┌──────────┐                         │
                │   END    │                         │
                └──────────┘                         │
```

24

FIG. 9

# FIG. 10

EP 3 876 224 B1

**EP 3 876 224 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018199185 A1
- US 2017046880 A1
- WO 2014093100 A1
- EP 2930658 A1
- WO 2018139611 A1
- JP 2001166259 A